# EUROPÄISCHE PATENTANMELDUNG

(11) **EP 4 685 591 A1**
(43) Veröffentlichungstag der Anmeldung: **28.01.2026**
(21) Anmeldenummer: 25191050.1
(22) Anmeldetag: 22.07.2025
(51) Int. Cl.: G05B 19/042

(54) **PROGRAMMIERBARE STEUERUNG UND VERFAHREN ZUM STEUERN EINER AUTOMATISIERTEN ANLAGE**

(30) Priorität: 25.07.2024 DE 102024121185
(71) Anmelder: Pilz GmbH & Co. KG, 73760 Ostfildern (DE)
(72) Erfinder: Fauser, Florian, 73760 Ostfildern (DE); Fürst, Christian, 73760 Ostfildern (DE); Stöckl, Siegfried, 73760 Ostfildern (DE); Wöhrle, Stefan, 73760 Ostfildern (DE)
(74) Vertreter: Witte, Weller & Partner Patentanwälte mbB

(57) **Zusammenfassung**

Eine programmierbare Steuerung zum Steuern einer automatisierten Anlage, in der eine Vielzahl von Steuerungsgeräten über ein Kommunikationsnetzwerk (50) miteinander verbunden sind, besitzt eine erste Hardwareplattform (60), auf der ein von der Hardwareplattform (60) abhängiges erstes Betriebssystem (62) installiert ist. Das erste Betriebssystem stellt eine echtzeitfähige erste Ausführungsumgebung (64) für ein erstes Steuerprogramm (66) bereit. Die Steuerung besitzt ferner eine Virtualisierungsplattform (68'a), die eine zweite Ausführungsumgebung (70) für ein zweites Steuerprogramm (72a) bereitstellt. Ein erstes Steuerprogramm (66) ist in der ersten Ausführungsumgebung (70) lauffähig und implementiert eine erste Steuerfunktionalität mit harten Echtzeitanforderungen. Ein zweites Steuerprogramm (72a) ist in der zweiten Ausführungsumgebung (70) lauffähig und implementiert eine zweite Steuerfunktionalität. Die erste Ausführungsumgebung (60) besitzt Zugriff auf eine erste Netzwerkschnittstelle (82, 84). Die zweite Ausführungsumgebung (70) stellt eine zweite Netzwerkschnittstelle (82) bereit. Das erste Steuerprogramm (66) und das zweite Steuerprogramm (72a) tauschen über die erste und die zweite Netzwerkschnittstelle (82) Daten miteinander aus.

## Beschreibung

Die vorliegende Erfindung betrifft eine programmierbare Steuerung zum Steuern einer automatisierten Anlage, in der eine Vielzahl von Steuerungsgeräten über ein Kommunikationsnetzwerk miteinander verbunden sind, sowie ein entsprechendes Verfahren.

Seit vielen Jahren werden automatisierte Anlagen mit Hilfe einer oder mehrerer programmierbarer Steuerungen gesteuert. Beispielhaft seien automatisierte Fertigungsanlagen für industrielle Produktionsprozesse und/oder stationäre Anlagen zur automatisierten Beförderung von Gegenständen, wie etwa Gepäckstücken an Flughäfen oder Waren und Paketen in logistischen Verteilzentren, genannt. Die Steuerungen erhalten in zyklisch wiederholten Intervallen sogenannte Eingangsinformationen, die einen aktuellen Istzustand der Anlage repräsentieren, und sie bestimmen anhand einer vordefinierten Steuerlogik eine Vielzahl von Ausgangsinformationen, mit denen Aktoren in der Anlage angesteuert werden. Die Eingangsinformationen werden in der Regel mithilfe von manuell betätigbaren Eingabegeräten, wie zum Beispiel Befehlstastern, und mithilfe von Sensoren, wie zum Beispiel Lichtschranken, Näherungsschaltern, Drehzahlsensoren, Drucksensoren u.a. erfasst. Aktoren können beispielsweise elektrische Antriebe, Magnetventile oder sogenannte Schütze sein, mit denen ein Strom elektromechanisch ein- oder ausgeschaltet werden kann.

Die Eingabegeräte, Sensoren und Aktoren sind üblicherweise in der Anlage verteilt und über sogenannte E/A-Geräte oder E/A-Baugruppen angeschlossen. Die E/A-Geräte oder E/A-Baugruppen wandeln die elektrischen oder optischen Signale von den Eingabegeräten und Sensoren üblicherweise in digitale Eingangsinformationen um und übertragen die Eingangsinformationen über das Kommunikationsnetzwerk an die Steuerung. Umgekehrt überträgt die Steuerung die Ausgangsinformationen üblicherweise in Form von digitalen Daten über das Kommunikationsnetzwerk und die E/A-Geräte oder E/A-Baugruppen erzeugen in Abhängigkeit von den erhaltenen Ausgangsinformationen elektrische oder optische Steuersignale, mit denen die Aktoren angesteuert werden. E/A-Geräte, die räumlich von der Steuerung entfernt in der Anlage verteilt sind, werden häufig als Feldgeräte bezeichnet. Es gibt aber auch Steuerungen, die E/A-Baugruppen beinhalten und zum Teil selbst "im Feld" angeordnet sind. Der Vollständigkeit halber sei angemerkt, dass es reine Eingabegeräte/-baugruppen, reine Ausgabegeräte/-baugruppen und gemischte Eingabe- und Ausgabegeräte bzw. -baugruppen gibt. Im Folgenden werden diese Baugruppen und Geräte allgemein als E/A-Geräte bezeichnet, ohne nach der individuellen Funktion zu unterscheiden.

Die Steuerlogik, nach der die aktuellen Ausgangsinformationen in Abhängigkeit von den aktuellen Eingangsinformationen bestimmt werden, wird üblicherweise durch ein Steuerprogramm festgelegt, das in einem Speicher der Steuerung ausführbar gespeichert ist. Daraus resultiert die häufig verwendete Bezeichnung Speicherprogrammierbare Steuerung (SPS). Im Unterschied zu handelsüblichen Computern für Büro- und Heimanwendungen sind SPS üblicherweise auf den zyklischen Arbeitsablauf in einer automatisierten Anlage sowie einen zuverlässigen Betrieb in rauen Umgebungsbedingungen (Schmutz, Temperaturschwankungen, Feuchtigkeit etc.) einer automatisierten Anlage optimiert.

EP 3 273 314 A1 offenbart eine SPS für mindestens ein Feldgerät in einer Industrieanlage. Die SPS weist eine Hardwareplattform auf, auf der ein Betriebssystem läuft. Das Betriebssystem kann ein echtzeitfähiges Betriebssystem sein. Unmittelbar auf dem Betriebssystem läuft ein sogenanntes Managementsystem, das mehrere Ausführungsumgebungen in einer jeweils eigenen Sandbox bereitstellt. In jeder Ausführungsumgebung ist ein separates Steuerprogramm lauffähig. Das Managementsystem beinhaltet einen Ressourcenmanager, der dazu ausgebildet ist, einer jeden Sandbox den Zugriff auf Arbeitsspeicher, Prozessorleistung und Kommunikationsressourcen der Hardwareplattform zuzuteilen. Insbesondere enthält das Managementsystem einen Hypervisor, der dazu ausgebildet ist, für jede Sandbox eine eigene virtuelle Maschine bereitzustellen. Dadurch, dass mehrere Steuerprogramme separat in den mehreren Ausführungsumgebungen laufen, soll die Erweiterbarkeit der speicherprogrammierbaren Steuerung verbessert werden. Insbesondere kann die Steuerfunktionalität der SPS bei einer Erweiterung der Industrieanlage auf weitere gleichartige Feldgeräte ausgedehnt werden und die SPS kann während der Laufzeit zur Ansteuerung anderer Feldgeräte umkonfiguriert werden.

EP 2 506 098 A1 offenbart eine Vorrichtung mit einer Mehrzahl programmierbarer Automatisierungskomponenten, die insbesondere als SPS ausgebildet sein können, und einer Mehrzahl Automatisierungs- bzw. Steuerprogramme. Jede Automatisierungskomponente beinhaltet eine virtuelle Maschine. Jede der virtuellen Maschinen ist zur Ausführung eines Betriebssystems und zumindest eines Automatisierungsprogramms eingerichtet. Eine Verwaltungseinrichtung kann auf Informationen über freien Ressourcen der verwalteten Automatisierungskomponenten und auf Informationen über die Anforderung zumindest eines auszuführenden Automatisierungsprogramms hinsichtlich der dafür benötigten Ressourcen zugreifen. Durch die zentrale Verwaltungseinrichtung, die mit jeweils einer Steuerungseinrichtung der Automatisierungskomponente zusammenwirkt, kann ein neu zu startendes Automatisierungsprogramm auf einer geeigneten Automatisierungskomponente zur Ausführung gebracht werden. Auf diese Weise soll die Zuordnung von Steuerprogrammen zu Automatisierungskomponenten flexibel ermöglicht werden.

In diesem Stand der Technik werden sogenannte virtuelle Maschinen vorgeschlagen, um mehrere Steuerprogramme flexibel auf einer oder mehreren speicherprogrammierbaren Steuerungen auszuführen. Virtuelle Maschinen sind eine Technologie aus dem allgemeinen Bereich der Computertechnologie. Sie beruhen auf der Installation einer sogenannten Virtualisierungssoftware auf einer physischen Computerhardware oder auf einem Betriebssystem, das auf der physischen Computerhardware läuft. Der physische Computer wird häufig als Host und die virtuelle Maschine als Gast bezeichnet. Ein Hypervisor kommuniziert zwischen der Computerhardware oder dem Host-Betriebssystem und einem Betriebssystem innerhalb der virtuellen Maschine, d.h. einem Gast-Betriebssystem. Der Hypervisor koordiniert die Ressourcenfreigabe, sodass die virtuelle Maschine isoliert neben mehreren anderen virtuellen Maschinen auf derselben Hardwareplattform ausgeführt werden kann. Prinzipiell kann sich das Gast-Betriebssystem von dem Host-Betriebssystem unterscheiden, was es möglich macht, ein Programm, das für ein bestimmtes Betriebssystem einer bestimmten Hardware geschrieben wurde, innerhalb einer virtuellen Maschine auf einem anderen Betriebssystem und/oder einer anderen Hardware auszuführen.

Die oben genannten Dokumente schlagen die Verwendung von virtuellen Maschinen im Bereich von speicherprogrammierbaren Steuerungen vor, um auf diese Weise Steuerprogramme in einer Automatisierungsvorrichtung flexibler verteilen und Ressourcen besser nutzen zu können. Wenngleich die Technologie der virtuellen Maschinen insoweit Vorteile verspricht, bleibt hier Raum für weitere Verbesserungen. Es ist daher eine Aufgabe der vorliegenden Erfindung, eine Vorrichtung und ein Verfahren der eingangs genannten Art anzugeben, die eine noch flexiblere und zugleich kostengünstige Möglichkeit bieten, eine Anlage automatisiert zu steuern.

Gemäß einem ersten Aspekt wird zur Lösung dieser Aufgabe eine programmierbare Steuerung zum Steuern einer automatisierten Anlage, in der eine Vielzahl von Steuerungsgeräten über ein Kommunikationsnetzwerk miteinander verbunden sind, vorgeschlagen, mit einer ersten Hardwareplattform, auf der ein von der ersten Hardwareplattform abhängiges erstes Betriebssystem installiert ist, das eine echtzeitfähige erste Ausführungsumgebung für ein erstes Steuerprogramm bereitstellt, mit einer Virtualisierungsplattform, die eine zweite Ausführungsumgebung für ein zweites Steuerprogramm bereitstellt, mit einem ersten Steuerprogramm, das in der ersten Ausführungsumgebung lauffähig ist und eine erste Steuerfunktionalität mit harten Echtzeitanforderungen implementiert, und mit einem zweiten Steuerprogramm, das in der zweiten Ausführungsumgebung lauffähig ist und eine zweite Steuerfunktionalität implementiert, wobei die erste Ausführungsumgebung Zugriff auf eine erste Netzwerkschnittstelle besitzt, wobei die zweite Ausführungsumgebung Zugriff auf eine zweite Netzwerkschnittstelle besitzt, und wobei das erste Steuerprogramm und das zweite Steuerprogramm über die erste und die zweite Netzwerkschnittstelle Daten miteinander austauschen.

Gemäß einem weiteren Aspekt wird ein Verfahren zum Steuern einer automatisierten Anlage, in der eine Vielzahl von Steuerungsgeräten über ein Kommunikationsnetzwerk miteinander verbunden sind, vorgeschlagen, mit den Schritten:
- Definieren einer Steuerfunktionalität, die einen gewünschten Betrieb der Anlage repräsentiert,
- Aufteilen der Steuerfunktionalität in einen ersten Anteil, der harte Echtzeitanforderungen definiert, und einen zweiten Anteil,
- Erhalten eines ersten Steuerprogramms, das den ersten Anteil repräsentiert, und Erhalten eines zweiten Steuerprogramms, das den zweiten Anteil repräsentiert,
- Bereitstellen einer ersten Hardwareplattform mit einem von der ersten Hardwareplattform abhängigen ersten Betriebssystem, das eine echtzeitfähige erste Ausführungsumgebung für das erste Steuerprogramm bereitstellt, wobei die erste Ausführungsumgebung Zugriff auf eine erste Netzwerkschnittstelle besitzt,
- Bereitstellen einer Virtualisierungsplattform, die eine zweite Ausführungsumgebung für das zweite Steuerprogramm bereitstellt, wobei die zweite Ausführungsumgebung Zugriff auf eine zweite Netzwerkschnittstelle besitzt,
- Ausführen des ersten Steuerprogramms in der ersten Ausführungsumgebung, und
- Ausführen des zweiten Steuerprogramms in der zweiten Ausführungsumgebung,
wobei das erste Steuerprogramm und das zweite Steuerprogramm über die erste und die zweite Netzwerkschnittstelle Daten miteinander austauschen.

Die programmierbare Steuerung macht vorteilhaften Gebrauch von den Möglichkeiten, die eine Virtualisierungsplattform bietet, indem zumindest die zweite Ausführungsumgebung von einer solchen Virtualisierungsplattform bereitgestellt wird. Dies beinhaltet, dass die zweite Ausführungsumgebung von einem zweiten Betriebssystem bereitgestellt werden kann, das auf der Virtualisierungsplattform installiert ist, und/oder dass die zweite Ausführungsumgebung ein sogenannter Container sein kann, beispielsweise ein Docker-Container, in dem das zweite Steuerprogramm ausgeführt wird. In jedem Fall ist ein Zugriff des zweiten Steuerprogramms auf Hardwareressourcen, wie etwa einen Prozessor oder einen Prozessorkern eines Mehrkernprozessors und einen Speicher, ausschließlich über die Virtualisierungsplattform möglich. In typischen Ausführungsbeispielen teilt die Virtualisierungsplattform dem zweiten Steuerprogramm den Zugriff auf die Hardwareressourcen in Abhängigkeit von zeitlich überlappenden Zugriffsanforderungen von koexistierenden weiteren Programmen, insbesondere weiteren Steuerprogrammen, situationsabhängig zu. Dementsprechend besitzt die zweite Ausführungsumgebung keinen direkten Zugang zu den vom zweiten Steuerprogramm jeweils benötigten Hardwareressourcen. Vielmehr ist die zweite Ausführungsumgebung beim Zugriff auf Hardwareressourcen von der situationsabhängigen Verwaltung der Hardwareressourcen durch die Virtualisierungsplattform abhängig. Dies ermöglicht einerseits eine flexible Zuordnung von Hardwareressourcen, kann andererseits aber zur Folge haben, dass die Ausführung eines Programmschrittes aus dem zweiten Steuerprogramm zeitlich verzögert erfolgt.

Im Gegensatz dazu und anders als in dem eingangs diskutierten Stand der Technik stellt die neue Steuerung daher eine erste Ausführungsumgebung für das erste Steuerprogramm zur Verfügung, die Echtzeitanforderungen erfüllt. Die echtzeitfähige erste Ausführungsumgebung besitzt einen Zugriff auf Hardwareressourcen der ersten Hardwareplattform, der unabhängig von koexistierenden weiteren Anwender- und Steuerprogrammen ist. Die echtzeitfähige erste Ausführungsumgebung kann in einigen Ausführungsbeispielen einen exklusiven und von der zweiten Ausführungsumgebung unbeeinflussten Zugang zu Hardwareressourcen der ersten Hardwareplattform beinhalten, um die Echtzeitfähigkeit zu gewährleisten. Beispielsweise können ausgewählte Hardwareressourcen der ersten Hardwareplattform, insbesondere zumindest ein ausgewählter Prozessorkern eines Mehrkernprozessors sowie ein ausgewählter Speicherbereich eines RAM-Arbeitsspeichers, dem ersten Betriebssystem exklusiv und vorzugsweise fest zugewiesen sein.

Die Virtualisierungsplattform kann in einigen Ausführungsbeispielen ein sogenannter Typ 2-Hypervisor sein. Wie bereits oben angedeutet, ist ein Hypervisor eine Software, die eine oder mehrere virtuelle Maschinen in Form von digitalen Abbildern eines physischen Computers bereitstellt. Der Hypervisor weist den virtuellen Maschinen physisch zur Verfügung stehende Hardwareressourcen zu. Ein Typ 2-Hypervisor erfüllt diese Aufgabe in Form einer Softwareanwendung, die neben weiteren Anwendungen auf einem Betriebssystem ausgeführt wird. Das Betriebssystem ist in diesem Fall auf der Computerhardware installiert. Dementsprechend verwaltet ein Typ 2-Hypervisor Hardwareressourcen, die ihm wiederum über das Betriebssystem zur Verfügung gestellt werden. Dementsprechend kann die Virtualisierungsplattform in einigen Ausführungsbeispielen eine Softwareanwendung sein, die neben dem ersten Steuerprogramm auf dem ersten Betriebssystem ausgeführt wird. In diesen Ausführungsbeispielen kann das erste Betriebssystem direkt oder über betriebssystemspezifische Treiber auf die Hardwareressourcen zugreifen. Vorteilhaft besitzt die erste Ausführungsumgebung in diesen Ausführungsbeispielen eine Priorität gegenüber der Virtualisierungsplattform, um die Echtzeitfähigkeit der ersten Ausführungsumgebung zu gewährleisten. Beispielhaft kann als Hypervisor Oracle^{®} VM VirtualBox oder VMware Workstation Pro verwendet sein.

Besonders bevorzugt ist die Virtualisierungsplattform in anderen Ausführungsbeispielen ein sogenannter Typ 1-Hypervisor bzw. Bare-Metal-Hypervisor. Ein solcher Hypervisor ist eine Software, die einen eigenen direkten Zugriff auf die Hardwareressourcen der verwendeten Hardwareplattform besitzt. Der Typ 1-Hypervisor sitzt in diesen Fällen unterhalb des ersten Betriebssystems und verwaltet die Hardwareressourcen der Hardwareplattform direkt. In diesen Ausführungsbeispielen kann der Typ 1-Hypervisor vorteilhaft so konfiguriert sein, dass das erste Betriebssystem einen exklusiven Zugriff bzw. Durchgriff auf ausgewählte Hardwareressourcen der ersten Hardwareplattform erhält, insbesondere auf einen oder mehrere ausgewählte Prozessorkerne eines Mehrkernprozessors. Beispielhaft kann Microsoft^{®} Hyper-V, VMware vSphere ESXi oder Proxmox VE als Hypervisor verwendet sein.

In allen Ausführungsbeispielen der neuen Steuerung ist das erste Betriebssystem ein Betriebssystem, das von der ersten Hardwareplattform abhängig ist. Insbesondere ist das erste Betriebssystem ein Betriebssystem, das individuelle Eigenschaften der ersten Hardwareplattform verwendet und infolgedessen nicht oder nicht ohne Weiteres auf eine typverschiedene Hardwareplattform portierbar ist. Das erste Betriebssystem kann aber auf eine typgleiche und insbesondere identische zweite Hardwareplattform portierbar sein. Die Abhängigkeit des ersten Betriebssystems von der ersten Hardwareplattform kann sich insbesondere darin zeigen, dass das erste Betriebssystem ausgewählte Register und/oder Kommunikationsschnittstellen der ersten Hardwareplattform anspricht und/oder dass das erste Betriebssystem eine definierte Prozessorarchitektur der ersten Hardwareplattform voraussetzt und dementsprechend nur lauffähig ist, wenn die definierte Prozessorarchitektur vorhanden ist. Im Gegensatz dazu wird das zweite Steuerprogramm in einer zweiten Ausführungsumgebung ausgeführt, die in jedem Fall von der Virtualisierungsplattform bereitgestellt wird und daher von der verwendeten Hardware entkoppelt ist. Das zweite Steuerprogramm kann daher von allen Vorteilen profitieren, die eine Virtualisierungsplattform bietet. Die Virtualisierungsplattform kann beispielsweise eine Hardware virtualisieren, die von der ersten Hardwareplattform typverschieden ist. Dies macht es möglich, das zweite Steuerprogramm in einer Ausführungsumgebung laufen zu lassen, die die erste Hardwareplattform für sich genommen nicht ermöglicht. Dementsprechend ermöglicht die Virtualisierungsplattform eine große Flexibilität für das zweite Steuerprogramm.

In bevorzugten Ausführungsbeispielen benötigt und verlangt die zweite Steuerfunktionalität keine harte Echtzeit. Die zweite Steuerfunktionalität kann in einigen vorteilhaften Ausführungsbeispielen eine weiche Echtzeit verwenden oder gar keine Echtzeitanforderungen stellen.

Harte Echtzeit bedeutet in diesem Zusammenhang, dass die Ausgangsinformationen, die das erste Steuerprogramm in Abhängigkeit von den Eingangsinformationen bestimmt, innerhalb von vordefinierten und vorab bekannten Zeitintervallen garantiert zur Verfügung stehen. Das erste Steuerprogramm wird innerhalb der ersten Ausführungsumgebung deterministisch ausgeführt. Die erste Ausführungsumgebung beinhaltet vorzugsweise Zeitgarantien und Überwachungsfunktionen. Sollte entgegen aller Vorkehrungen eine aktuelle Ausgangsinformation nicht innerhalb eines vordefinierten und vorab bekannten Zeitintervalls zur Verfügung stehen, wird dies von dem ersten Betriebssystem als Fehler erkannt bzw. als Systemversagen gewertet und es wird eine Fehlerreaktion ausgelöst. Beispielsweise kann die erste Ausführungsumgebung dafür sorgen, dass ein bewegtes Anlagenteil abgeschaltet oder auf andere Weise in einen sicheren Ruhezustand gebracht wird und/oder dass ein stationärer Anlagenteil stromlos geschaltet wird, wenn eine Ausgangsinformation nicht innerhalb des garantierten Zeitintervalls mit einem aktuellen Wert zur Verfügung steht. Dabei ist im Unterschied zu "normalen" Steuerfunktionen zu beachten, dass diese Fehlerreaktion bereits in Abhängigkeit davon ausgelöst wird, dass ein vordefiniertes und vorab bekanntes Zeitintervall für die Ausführung der Steuerfunktion überschritten wurde. Die harte Echtzeit wird durch die Ausführung des ersten Steuerprogramms in der hardwarenahen, von der ersten Hardwareplattform abhängigen Ausführungsumgebung sichergestellt.

Weiche Echtzeit kann demgegenüber die Einhaltung von vordefinierten Zeitintervallen innerhalb eines statistischen Kriteriums, wie etwa einem statistischen Mittelwert beinhalten. Für die Ausführung des zweiten Steuerprogramms innerhalb der zweiten Ausführungsumgebung bestehen in den bevorzugten Ausführungsbeispielen daher keine Zeitgarantien. Beispielsweise kann für die Ausführung des zweiten Steuerprogramms innerhalb der zweiten Ausführungsumgebung ein Jitter von mehr als 0,8 ms akzeptabel sein.

Die Kombination der ersten, hardwareabhängigen Ausführungsumgebung für das erste Steuerprogramm mit der zweiten virtualisierten Ausführungsumgebung für das zweite Steuerprogramm bietet eine große Flexibilität in Kombination mit einer hohen Qualität in Bezug auf zeitkritische Steuerfunktionen. Das erste Steuerprogramm und das zweite Steuerprogramm tauschen über die erste Netzwerkschnittstelle und die zweite Netzwerkschnittstelle Daten miteinander aus. Dieser Datenaustausch erfolgt über Netzwerkschnittstellen und entsprechender Verwendung von standardisierten bzw. nichtproprietären Kommunikationsprotokollen, was ebenfalls zu einer hohen Flexibilität in Bezug auf die Realisierung von unterschiedlichen Steuerfunktionen beiträgt. Beispielhaft kann das zweite Steuerprogramm aktuelle Prozessdaten, wie insbesondere ausgewählte Eingangsinformationen und/oder aktuelle Ausgangsinformationen, die das erste Steuerprogramm zur Verfügung stellt, lesen und basierend darauf ein Anlagenmonitoring implementieren, das keine harte Echtzeit benötigt. Der Datenaustausch kann in einigen Ausführungsbeispielen auf einfache Zahlenwerte und/oder boolsche Informationen beschränkt sein. In einem besonders vorteilhaften Ausführungsbeispiel kann das zweite Steuerprogramm eine Bildverarbeitung mit weicher Echtzeit ausführen, wobei ein oder mehrere Bilder, die der Bildverarbeitung unterzogen werden, von einer oder mehreren Kameras in der Anlage stammen, die als Sensor fungieren. Hier wird der Vorteil der zweiten Ausführungsumgebung besonders deutlich: Eine für die Bildverarbeitung optimierte Hardware, wie z.B. ein PC mit leistungsstarker CPU (Central Processing Unit) und/oder GPU (Graphical Processing Unit), einem großen Arbeitsspeicher und einer vorzugsweise hochperformant daran angebundenen Kamera führt das zweite Steuerprogramm aus und beeinflusst mit seinen Ergebnissen (z.B. erkanntes Bauteil auf einem Förderband) das erste Steuerprogramm. Des Weiteren kann das zweite Steuerprogramm in einigen Ausführungsbeispielen eine Prozessumschaltung in dem ersten Steuerprogramm bewirken oder zum Beispiel einen Steuerbefehl, etwa in Form eines GCode erzeugen und an das erste Steuerprogramm übertragen, so dass die Anlage anschließend mit einem geänderten Betriebsablauf gesteuert wird, wobei der geänderte Betriebsablauf über das zweite Steuerprogramm auslösbar ist und über das erste Steuerprogramm implementiert wird.

Die zweite Netzwerkschnittstelle ist vorteilhaft eine virtuelle Netzwerkschnittstelle, d.h. eine Software, die für das zweite Steuerprogramm in der zweiten Ausführungsumgebung wie ein physischer Netzwerkadapter erreichbar ist. Das zweite Steuerprogramm kann auf den virtuellen Netzwerkadapter zugreifen, als ob dies ein physischer Netzwerkadapter wäre. In einigen Ausführungsbeispielen kann die erste Netzwerkschnittstelle ein physischer Netzwerkadapter sein. Prinzipiell ist es jedoch möglich, dass auch die erste Netzwerkschnittstelle eine virtuelle Netzwerkschnittstelle ist, die beispielsweise von dem ersten Betriebssystem bereitgestellt wird. In einigen Ausführungsbeispielen können die erste und die zweite Netzwerkschnittstelle im selben physischen Gerät liegen, insbesondere wenn die erste Ausführungsumgebung durch einen Typ 1-Hypervisor von der zweiten Ausführungsumgebung isoliert ist. Die Kommunikation über derartige Netzwerkschnittstellen ermöglicht eine kostengünstige Implementierung und erleichtert eine Portierung des zweiten Steuerprogramms.

Die harte Echtzeit der ersten Ausführungsumgebung kann aufgrund der hardwareabhängigen Implementierung der ersten Ausführungsumgebung auf relativ kostengünstige Weise erreicht werden. Vorteilhaft wird die Steuerfunktionalität, die den gewünschten Betrieb der Anlage repräsentiert, in einen ersten Anteil mit harten Echtzeitanforderungen und einen zweiten Anteil ohne harte Echtzeitanforderungen aufgeteilt und die Teilfunktionalitäten werden den unterschiedlichen Ausführungsumgebungen entsprechend zugeordnet. So kann auf sehr kostengünstige Weise eine hohe Flexibilität mit hohen Echtzeitanforderungen, wie sie für einige Anlagenfunktionen benötigt werden, kombiniert werden. Die oben genannte Aufgabe ist vollständig gelöst.

In einer bevorzugten Ausgestaltung ist die Virtualisierungsplattform auf der ersten Hardwareplattform implementiert und interagiert direkt mit der ersten Hardwareplattform.

In dieser Ausgestaltung beinhaltet die Virtualisierungsplattform einen Typ 1-Hypervisor (Bare-Metal-Hypervisor), der direkt auf der ersten Hardwareplattform installiert ist. Der Typ 1-Hypervisor isoliert das erste Betriebssystem mit der ersten Ausführungsumgebung sehr effektiv von der zweiten Ausführungsumgebung, so dass die zweite Ausführungsumgebung vorteilhaft auf derselben ersten Hardwareplattform bereitgestellt werden kann, wie die erste Ausführungsumgebung. Die Ausgestaltung ermöglicht daher eine kostengünstige Realisierung mit einer einzigen Hardwareplattform. Vorzugsweise beinhaltet die erste Hardwareplattform einen Mehrkernprozessor als CPU, wie etwa einen Prozessor mit 2, 4, 8 oder gar 16 Prozessorkernen, und der Typ 1-Hypervisor ist so konfiguriert, dass das erste Betriebssystem exklusiven Zugriff auf einen oder mehrere Prozessorkerne des Mehrkernprozessors erhält. Der Typ 1-Hypervisor kann der zweiten Ausführungsumgebung exklusiven oder geteilten Zugriff auf weitere Prozessorkerne ermöglichen, die nicht dem ersten Betriebssystem exklusiv zugewiesen sind. Es ist in einigen Ausführungsbeispielen möglich, dass der Typ 1-Hypervisor dem ersten Betriebssystem bzw. der dadurch bereitgestellten ersten Ausführungsumgebung einen oder mehrere Prozessorkerne exklusiv zuweist und darüber hinaus die weiteren Prozessorkerne dynamisch wechselnd dem ersten Betriebssystem bzw. der dadurch bereitgestellten ersten Ausführungsumgebung und der zweiten Ausführungsumgebung zuweist. Die Ausgestaltung ermöglicht eine hohe Arbeitsgeschwindigkeit für das erste Steuerprogramm und erleichtert somit eine effiziente Implementierung der Echtzeitfähigkeit. Dabei ist von Vorteil, dass das erste und das zweite Steuerprogramm auch in dieser Ausgestaltung über die Netzwerkschnittstellen kommunizieren. Vorteilhaft können die erste und die zweite Netzwerkschnittstelle in dieser Ausgestaltung jeweils virtuelle Netzwerkschnittstellen sein.

In einer weiteren Ausgestaltung ist die Virtualisierungsplattform auf dem ersten Betriebssystem implementiert und interagiert über das erste Betriebssystem mit der ersten Hardwareplattform. Die Virtualisierungsplattform beinhaltet in dieser Ausgestaltung einen Typ 2-Hypervisor. Auch in dieser Ausgestaltung sind das erste Steuerprogramm und das zweite Steuerprogramm auf der ersten Hardwareplattform ausführbar. Allerdings läuft das zweite Steuerprogramm im Unterschied zu dem ersten Steuerprogramm innerhalb einer virtuellen Maschine, während das erste Steuerprogramm über das erste Betriebssystem einen nicht-virtualisierten Zugriff auf die vorhandenen Hardwareressourcen erhält. Die Ausgestaltung ist einfach zu administrieren, da die Virtualisierungsplattform als Softwareanwendung auf dem ersten Betriebssystem eingerichtet werden kann. Die Ausgestaltung macht es daher auf einfache und kostengünstige Weise möglich, ein zweites, weniger zeitkritisches Steuerprogramm mit dem ersten Steuerprogramm zu kombinieren. Vorteilhaft kann das zweite Steuerprogramm Programmcode beinhalten, der ursprünglich nicht für die erste Hardwareplattform erstellt wurde, weil die erforderliche Anpassung über die Virtualisierungsebene einfach möglich ist. Des Weiteren macht diese Ausgestaltung es auf einfache und kostengünstige Weise möglich, Steuerprogramme von einer Hardwareplattform zu einer typverschiedenen anderen Hardwareplattform zu portieren, insbesondere wenn es um weniger zeitkritische Aufgaben geht.

In einer weiteren Ausgestaltung ist die Virtualisierungsplattform auf einer zweiten Hardwareplattform implementiert, die räumlich getrennt von der ersten Hardwareplattform angeordnet und über das Kommunikationsnetzwerk mit der ersten Hardwareplattform verbunden ist.

Dadurch dass das erste Steuerprogramm und das zweite Steuerprogramm Daten über Netzwerkschnittstellen miteinander austauschen, ist eine sehr einfache Verlagerung des zweiten Steuerprogramms auf eine zweite Hardwareplattform möglich, sobald diese an das Kommunikationsnetzwerk angeschlossen ist. In den bevorzugten Ausführungsbeispielen müssen weder an dem ersten und zweiten Steuerprogramm noch an den Kommunikationsverbindungen manuelle Änderungen vorgenommen werden, wenn das zweite Steuerprogramm in eine andere Ausführungsumgebung verlagert wird, da die Kommunikation über die Netzwerkschnittstellen erfolgt und infolgedessen etablierte Routingverfahren verwendet. Die Datenverarbeitungs- und Rechenkapazität der Anlage dieser Ausgestaltung kann auf sehr einfache und kostengünstige Weise skaliert und insbesondere erhöht werden. Des Weiteren können vorhandene Ressourcen der Anlage auf sehr einfache Weise effizient genutzt werden.

In einer weiteren Ausgestaltung ist die zweite Hardwareplattform eine Cloudplattform.

Dadurch dass die erste Ausführungsumgebung Ressourcen für ein erstes Steuerprogramm bereitstellt, das zeitkritische Steuerungsaufgaben ausführt, können weniger zeitkritische Steuerungsaufgaben in die zweite Ausführungsumgebung verlagert werden. Aufgrund der Datenkommunikation über Netzwerkschnittstellen kann die zweite Ausführungsumgebung auf sehr einfache Weise in eine weit entfernte Cloudplattform verlagert werden. Vorteilhaft ermöglicht diese Ausgestaltung eine Implementierung des zweiten Steuerprogramms als Software-as-a-Service (SaaS)-Anwendung. Die Ausgestaltung erhöht die Flexibilität noch weiter, da Datenverarbeitungs- und Rechenkapazität auf besonders effiziente Weise an aktuelle Bedürfnisse angepasst werden können, ohne dass eine umfangreiche Investition in die Hardware der Steuervorrichtung notwendig wird.

In einer weiteren Ausgestaltung implementiert die erste Netzwerkschnittstelle ein IP-(Internet Protokoll) kompatibles Schnittstellenprotokoll. Des Weiteren ist es bevorzugt, wenn auch die zweite Netzwerkschnittstelle ein IP-kompatibles Schnittstellenprotokoll implementiert.

In dieser Ausgestaltung kommunizieren das erste und das zweite Steuerprogramm über einen etablierten Kommunikationsstandard für digitale Netzwerkkommunikation. In bevorzugten Ausführungsbeispielen beinhaltet das IP-kompatible Schnittstellenprotokoll ein TCP/IP-Protokoll und/oder ein UDP/IP-Protokoll. Durch diese Ausgestaltung wird die Portierbarkeit des zweiten Steuerprogramms noch weiter erleichtert. Außerdem ermöglicht diese Ausgestaltung eine besonders kostengünstige Implementierung.

Besonders vorteilhaft ermöglicht insbesondere diese Ausgestaltung einen sehr einfachen und effizienten Zugriff von außen auf das erste Steuerprogramm in der Echtzeitumgebung. In gewisser Weise erhält die harte Echtzeitumgebung der Vorrichtung ein API (Application Programming Interface), das zwar einerseits proprietär für die erste Hardwareplattform ist, aber andererseits über Standard-Ethernet und Standard-Protokolle, wie etwa OPC UA, Modbus/TCP oder MQTT von außen genutzt werden kann.

In einer weiteren Ausgestaltung besitzt die erste Netzwerkschnittstelle eine innerhalb des Kommunikationsnetzwerks fest zugewiesene erste Adresse.

Diese Ausgestaltung trägt vorteilhaft dazu bei, die Portierbarkeit des zweiten Steuerprogramms noch weiter zu vereinfachen. Durch Zuweisen einer festen Netzwerkadresse an die erste Netzwerkschnittstelle ist eine Anpassung der Kommunikationsbeziehungen mit minimalem Aufwand möglich.

In einer weiteren Ausgestaltung weist die Steuerung eine dritte Ausführungsumgebung auf, die eine dritte Netzwerkschnittstelle bereitstellt, wobei das zweite Steuerprogramm wahlweise in der zweiten Ausführungsumgebung und/oder in der dritten Ausführungsumgebung lauffähig ist.

Diese Ausgestaltungmacht macht vorteilhaften Gebrauch von der einfachen Portierbarkeit des zweiten Steuerprogramms. Sie macht es insbesondere möglich, das zweite Steuerprogramm im laufenden Anlagenbetrieb zu verlagern, indem eine Kopie des zweiten Steuerprogramms in der dritten Ausführungsumgebung installiert werden kann, während das zweite Steuerprogramm in der zweiten Ausführungsumgebung ausgeführt wird. Ein Umschalten von dem zweiten Steuerprogramm zu der Kopie ist dann sehr schnell möglich.

In einer weiteren Ausgestaltung ist dem zweiten Steuerprogramm innerhalb des Kommunikationsnetzwerks eine feste Adresse zugewiesen ist. Vorzugsweise ist die feste Adresse unabhängig davon, ob das zweite Steuerprogramm in der zweiten Ausführungsumgebung oder in der dritten Ausführungsumgebung ausgeführt wird.

Auch diese Ausgestaltung trägt vorteilhaft dazu bei, die Portierbarkeit des zweiten Steuerprogramms weiter zu vereinfachen. Durch Zuweisen einer festen Adresse, die eine feste IP-Adresse und/oder ein eindeutiger Bezeichner innerhalb des Netzwerks sein kann, kann eine Anpassung der Kommunikationsbeziehungen zwischen dem ersten und dem zweiten Steuerprogramm weitgehend entfallen bzw. auf ein Minimum reduziert werden.

In einer weiteren Ausgestaltung virtualisiert die Virtualisierungsplattform ein zweites Betriebssystem.

Diese Ausgestaltung kann alternativ oder ergänzend zu einem Hypervisor zur Anwendung kommen. In dieser Ausgestaltung kommt vorteilhaft eine sogenannte Containervirtualisierung zur Anwendung. Die Containervirtualisierung beinhaltet die Erstellung autarker Softwarepakete, die unabhängig von der Hardware, auf denen sie ausgeführt werden, konsistent funktionieren. Eine beispielhafte Containervirtualisierung dieser Ausgestaltung beinhaltet die Open-Source-Container-Engine Docker. Die Ausgestaltung ermöglicht auf sehr komfortable Weise die Ergänzung des ersten hardwarenahen Steuerprogramms durch zweite Steuerprogramme in Form von Applikationsprogrammen bzw. "Apps". Die erste Ausführungsumgebung kann in dieser Ausgestaltung sehr flexibel und einfach durch Apps erweitert werden. Vorteilhaft kann die Steuerfunktionalität des ersten Steuerprogramms in der echtzeitfähigen ersten Ausführungsumgebung um weitere Funktionalitäten außerhalb der echtzeitfähigen ersten Ausführungsumgebung ergänzt werden, ohne dass die harte Echtzeitfähigkeit der ersten Ausführungsumgebung beeinträchtigt wird. Mehrere zweite Steuerprogramme mit unterschiedlichen Steuerfunktionalitäten können in separaten Containern, insbesondere separaten Docker-Containern, ausgeführt werden, ohne sich gegenseitig zu stören oder negativ zu beeinflussen. Vorteilhaft kommunizieren die einzelnen Steuerprogramme in den separaten Ausführungsumgebungen und Container ausschließlich über die Netzwerkschnittstellen, was eine einfache und flexible Zusammenführung erlaubt.

In einer weiteren Ausgestaltung weist die Anlage ein entlang einer Bewegungsachse bewegliches Anlagenteil auf, und das erste Steuerprogramm regelt eine aktuelle Position des beweglichen Anlagenteils entlang der Bewegungsachse.

In dieser Ausgestaltung implementiert das erste Steuerprogramm vorteilhaft eine Lagereglung des beweglichen Anlagenteils entlang der Bewegungsachse. Eine derartige Steuerfunktionalität wird in vielen automatisierten Anlagen benötigt und sie ist häufig zeitkritisch. Die Ausgestaltung macht es auf einfache Weise möglich, eine solche zeitkritische Steuerfunktionalität flexibel mit zeitunkritischen weiteren Funktionalitäten zu ergänzen, ohne die zeitkritische Bewegungssteuerung negativ zu beeinträchtigen.

In einer weiteren Ausgestaltung beinhaltet die erste Steuerfunktionalität eine Sicherheitsfunktion zum Schutz von Personen vor Verletzungen.

Eine Sicherheitsfunktion zum Schutz von Personen vor Verletzungen ist insbesondere eine Not-Aus-Funktion im Sinne der einschlägigen Normen zur Maschinensicherheit, wie etwa ISO 13849 und/oder IEC 61508. In bevorzugten Ausführungsbeispielen erfüllt die erste Hardwareplattform mit der ersten Ausführungsumgebung die Anforderungen gemäß Performance Level PL d oder höher nach ISO 13849 und/oder den Safety Integrity Level SIL 2 oder höher nach IEC 61508. Die Ausgestaltung macht es auf einfache Weise möglich, eine derartige Steuerfunktionalität flexibel mit weiteren Funktionalitäten zu ergänzen, ohne die sicherheitsrelevante Zertifizierung zu gefährden.

In einer weiteren Ausgestaltung beinhaltet die zweite Steuerfunktionalität zumindest eine Funktionalität aus der folgenden Gruppe: Monitoring, Diagnose, Visualisierung, Datenverarbeitung, insbesondere Bilddatenverarbeitung, Datenweitergabe an ein Enterprise-Resource-Planning (ERP)-System, Umschalten zwischen verschiedenen Betriebsarten der Anlage.

Diese Ausgestaltung ergänzt das erste Steuerprogramm sehr vorteilhaft um Funktionalitäten, die weniger zeitkritisch sind und die daher sehr komfortabel in die zweite Ausführungsumgebung verlagert werden können. Zudem macht es diese Ausgestaltungmöglich, derartige Funktionalitäten auf effiziente Weise mit sehr unterschiedlichen zeitkritischen Steuerfunktionalitäten in der ersten Ausführungsumgebung zu kombinieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen.
- Fig. 1: eine vereinfachte Darstellung einer modularen programmierbaren Steuerung zum Steuern einer automatisierten Anlage, in der ein Ausführungsbeispiel des neuen Verfahrens zur Anwendung kommt,
- Fig. 2: eine schematische Darstellung der Steuerung aus Fig. 1 mit mehreren Ausführungsumgebungen gemäß einem ersten Ausführungsbeispiel, und
- Fig. 3: eine schematische Darstellung der Steuerung aus Fig. 1 mit mehreren Ausführungsumgebungen gemäß einem weiteren Ausführungsbeispiel.

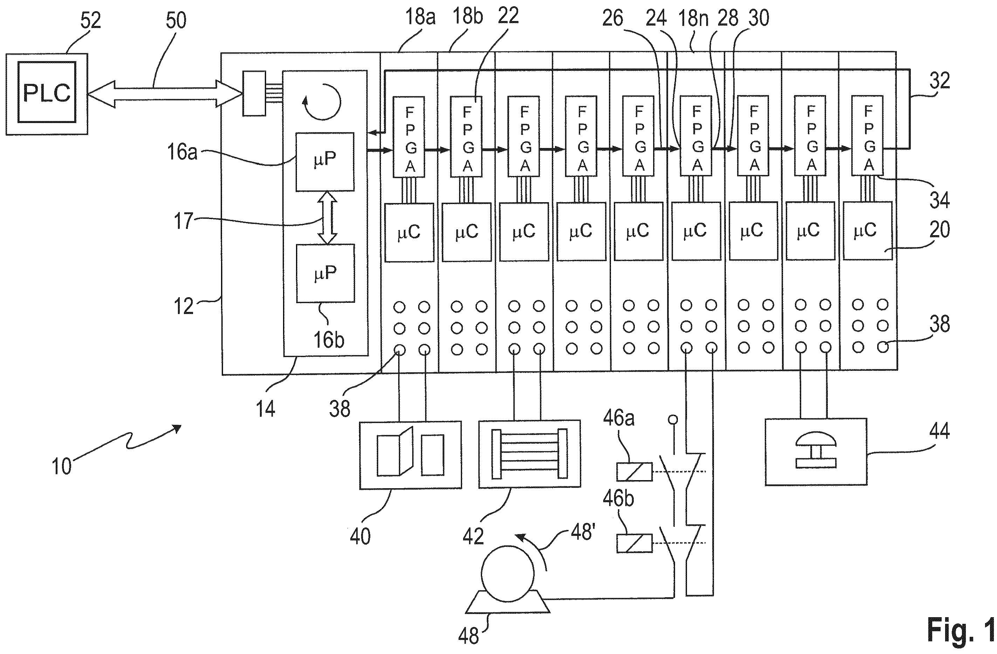

In Fig. 1 ist eine programmierbare Steuerung, in der ein Ausführungsbeispiel des neuen Verfahrens zur Anwendung kommt, in ihrer Gesamtheit mit der Bezugsziffer 10 bezeichnet.

Die Steuerung 10 ist in diesem Fall eine modulare Steuerung, die zur automatisierten Steuerung einer technischen Anlage dient. Beispielsweise ist die technische Anlage eine Produktionslinie eines Autoherstellers, ein Transportband an einem Flughafen, eine Seilbahn oder eine andere, vorzugsweise stationäre Anlage mit zumindest einem beweglichen Anlagenteil, dessen Bewegung entlang einer Bewegungsachse automatisiert gesteuert werden soll. In bevorzugten Ausführungsbeispielen ist die Steuerung in der Lage, sicherheitsrelevante Funktionen im Sinne der einschlägigen Normen zur Maschinensicherheit und Standardfunktionen zu steuern. Letzteres sind Funktionen, die den normalen Betriebsablauf der Anlage betreffen. Ersteres sind Funktionen, die vor allem dazu dienen, Unfälle und Verletzungen durch den Betrieb der Anlage zu vermeiden. Prinzipiell kann das neue Verfahren jedoch auch bei anderen Steuerungen eingesetzt werden, insbesondere Steuerungen, die ausschließlich Standardfunktionen einer Anlage steuern, oder bei reinen Sicherheitssteuerungen, die ausschließlich Sicherheitsfunktionen steuern.

Die modulare Steuerung 10 besitzt hier ein Kopfteil 12, das in diesem Fall eine fehlersichere Auswerte- und Steuereinheit 14 aufweist. In den bevorzugten Ausführungsbeispielen besitzt die Auswerte- und Steuereinheit 14 zumindest zwei Prozessoren 16a, 16b, die ein sicherheitsrelevantes (FS)-Steuerprogramm redundant zueinander ausführen und sich gegenseitig überwachen. Dies ist in Fig. 1 durch einen Doppelpfeil 17 vereinfacht dargestellt. Fehlersicher bedeutet hier, dass das Kopfteil 12 zumindest die Anforderungen gemäß SIL2 der internationalen Norm IEC 61508 und/oder die Anforderungen PL d gemäß der Norm EN ISO 13849-1 oder vergleichbare Anforderungen erfüllt.

Die Steuerung 10 beinhaltet ferner eine Reihe von E/A-Modulen 18a, 18b, ... 18n ... . Die E/A-Module 18 dienen zur Aufnahme und Ausgabe von Signalen, mit denen die Steuerung 10 den Betrieb der Anlage beeinflusst. In einem bevorzugten Ausführungsbeispiel sind die E/A-Module elektrisch und mechanisch mit dem Kopfteil 12 verbunden, wie dies in Fig. 1 vereinfacht dargestellt ist. In anderen Ausführungsbeispielen ist es möglich, dass die E/A-Modulen 18 getrennt von dem Kopfteil 12 bzw. getrennt von einer dem Kopfteil 12 entsprechenden Steuerung angeordnet sind und über eine Kommunikationsverbindung mit dem Kopfteil 12 kommunizieren.

Im vorliegenden Ausführungsbeispiel besitzt jedes E/A-Modul 18 einen Steuerbaustein 20, der beispielsweise mit Hilfe eines Mikrocontrollers realisiert ist. Anstelle eines Mikrocontrollers oder ergänzend kann der Steuerbaustein 20 als ASIC, als FPGA, mit Hilfe von leistungsfähigeren Mikroprozessoren oder mit vergleichbaren Logikbausteinen realisiert sein.

Des Weiteren besitzt in diesem Ausführungsbeispiel jedes E/A-Modul 18 einen Kommunikationsbaustein 22, der in bevorzugten Ausführungsbeispielen als FPGA realisiert ist. Prinzipiell ist es möglich, dass der Kommunikationsbaustein 22 und der Steuerbaustein 20 zu einem gemeinsamen Kommunikations- und Steuerbaustein integriert sind und/oder dass die Funktion des Kommunikationsbausteins 22 durch geeignete Programmierung eines Mikrocontrollers realisiert ist.

Der Kommunikationsbaustein 22 besitzt einen Eingang 24, an den eine erste Datenleitung 26 angeschlossen ist, sowie einen Ausgang 28, an den eine zweite Datenleitung 30 angeschlossen ist (dargestellt in Fig. 1 am Beispiel der E/A-Modul 18n). In dem bevorzugten Ausführungsbeispiel bilden die erste Datenleitung 26 und die zweite Datenleitung 30 zusammen eine serielle Datenleitung, die durch sämtliche Kommunikationsbausteine 22 der E/A-Module 18 geführt ist. In dem dargestellten Ausführungsbeispiel verbindet die serielle Datenleitung die E/A-Module 18 mit dem Kopfteil 12. Vom letzten Kommunikationsbaustein 22 in der Reihe ist eine weitere Datenleitung 32 zurück zur Auswerte- und Steuereinheit 14 des Kopfteils 12 geführt, so dass sich in diesem Fall eine Ringleitung ergibt, über die die Auswerte- und Steuereinheit 14 des Kopfteils 12 mit den E/A-Modulen 18 kommunizieren kann. Prinzipiell kann der Kopfteil 12 auch über eine andere Netzwerktopologie mit den E/A-Modulen 18 kommunizieren, um Eingangsinformationen von den E/A-Modulen 18 zyklisch einzulesen und Ausgangsinformationen zyklisch an die E/A-Module 18 auszugeben.

Jeder Kommunikationsbaustein 22 besitzt hier einen weiteren Ausgang 34, an dem der Kommunikationsbaustein 22 Ausgangsinformationen für den Steuerbaustein 20 zur Verfügung stellt. Der Ausgang 34 kann ein Register oder Speicherbereich oder ein logischer Datenübergabepunkt in einem Ablaufprogramm sein, wenn der Kommunikationsbaustein 22 in dem Steuerbaustein 20 integriert ist.

Umgekehrt kann der Kommunikationsbaustein 22 Eingangsinformationen von dem Steuerbaustein 20 aufnehmen und in den seriellen Datenstrom integrieren, der über den Ausgang 28 zum nächstfolgenden Kommunikationsbaustein gesendet wird. Dementsprechend kann der Ausgang 34 eine bidirektionale Eingabe- und Ausgabeschnittstelle zu einem sogenannten Modulbus sein.

Jedes E/A-Modul 18 besitzt eine Vielzahl von Anschlüssen 38, an denen Befehlstaster, Sensoren und/oder Aktoren angeschlossen werden können. Beispielhaft sind hier ein Schutztürschalter 40, ein Lichtgitter 42, ein Not-Aus-Taster 44 und zwei Schütze 46a, 46b dargestellt. Mit Hilfe der Schütze 46a, 46b kann die Steuerung 10 die Stromversorgung zu einem elektrischen Motor 48 der Anlage unterbrechen, wenn beispielsweise der Schutztürsensor 40 signalisiert, dass eine Schutztür geöffnet wurde. Der Motor 48 besitzt einen Läufer (hier nicht dargestellt), der in an sich bekannter Weise eine Bewegung relativ zu einer Achse ausführen kann. Die Bewegung kann eine Drehbewegung relativ zu einer Drehachse 48' und/oder eine Translationsbewegung sein.

Die Sensoren 40, 42, 44 und Aktoren 46, 48 sind hier beispielhaft dargestellt. In der Praxis können weitere Sensoren und/oder Aktoren an die Steuerung 10 angeschlossen sein, etwa Drehzahlsensoren, Temperatursensoren, Positionssensoren, Zwei-Hand-Taster, Lichtschranken, Lichtgitter, Laserscanner u.a. sowie beispielsweise Magnetventile als Aktoren oder auch Signalleuchten.

Die Auswerte- und Steuereinheit 14 sammelt über die E/A-Module 18 in zyklisch wiederkehrenden Zeitintervallen die Eingangsinformationen ein, die jeweils einen aktuellen Zustand der Sensoren und Aktoren repräsentieren (häufig als Prozessabbild der Eingänge PAE bezeichnet). Anschließend verarbeitet die Auswerte- und Steuereinheit 14 die Eingangsinformationen und erzeugt in Abhängigkeit davon weitere Ausgangsinformationen, die an die Steuerbausteine 20 der E/A-Module 18 übertragen werden. Die Ausgangsinformationen können beispielsweise einen Steuerbefehl beinhalten, der dazu führt, dass die Stromversorgung für den Motor 48 mit Hilfe der Schütze 46 unterbrochen wird. Außerdem können die Eingangs- und Ausgangsinformationen Informationen beinhalten, die einen aktuellen Zustand der E/A-Module selbst betreffen, insbesondere Diagnoseinformationen und/oder Konfigurationsinformationen.

In einem Ausführungsbeispiel erzeugt die Auswerte- und Steuereinheit 14 in zyklisch wiederkehrenden Intervallen einen Sendedatenstrom, der über die Datenleitungen 26, 30, 32 von einem E/A-Modul 18 zum nächsten weitergereicht wird. Jedes E/A-Modul 18 liest zugeordnete Daten aus dem empfangenen Sendedatenstrom und schreibt aktuelle Prozessdaten in den Sendedatenstrom, der hier aufgrund der Ringtopologie an das nächste E/A-Modul und letztlich an die Auswerte- und Steuereinheit 14 übertragen wird. Auf diese Weise kann die Auswerte- und Steuereinheit 14 die Prozessdaten aller angeschlossenen E/A-Module 18 zyklisch einsammeln und mit den einzelnen E/A-Modulen 18 kommunizieren. Darüber hinaus ist in diesem und anderen Ausführungsbeispielen prinzipiell auch eine Querkommunikation zwischen E/A-Modulen möglich, wenn dies beispielsweise für eine schnelle dezentrale Abschaltung des Motors 48 beim Öffnen der Schutztür 40 gewünscht ist.

In dem hier dargestellten Ausführungsbeispiel besitzt die Steuerung 10 neben der "internen" Kommunikationsverbindung zu den E/A-Modulen 18 noch eine externe Kommunikationsverbindung, die in Fig. 1 vereinfacht durch den Doppelpfeil 50 dargestellt ist. Die externe Kommunikationsverbindung kann ein Feldbus sein, über den der Kopfteil 12 mit anderen Steuerungsgeräten kommuniziert, beispielsweise mit einer anderen Steuerung 52, einem oder mehreren Feldgeräten, Bediengeräten (Human-Machine-Interfaces), einem Fertigungsmanagementsystem (Manufacturing Execution System), einem Enterprise Resource Planning (ERP)-System und/oder Cloudanwendungen. In bevorzugten Ausführungsbeispielen ist die Kommunikationsverbindung 50 eine Ethernet-kompatible Kommunikationsverbindung.

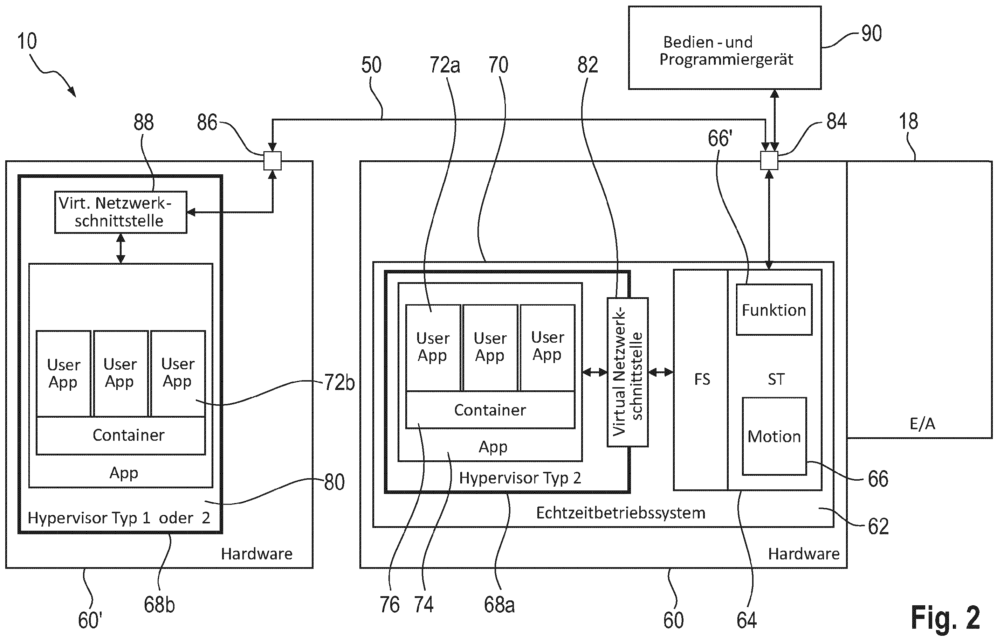

Fig. 2 zeigt die Steuerung aus Fig. 1 anhand eines funktionalen Blockschaltbildes mit weiteren Details. Gleiche Bezugszeichen bezeichnen dieselben Elemente wie zuvor. Wie in Fig. 1 dargestellt ist, besitzt die Auswerte- und Steuereinheit 14 in dem Kopfteil 12 Prozessoren 16a, 16b sowie zugehörige Speicher (RAM, ROM; hier nicht dargestellt). Die Prozessoren und zugehörigen Speicher sind Bestandteil einer Hardwareplattform, die in Fig. 2 allgemein mit der Bezugsziffer 60 bezeichnet ist. Auf der Hardwareplattform 60 ist hier in an sich bekannter Weise ein von der Hardwareplattform abhängiges Betriebssystem 62 installiert, das typischerweise vom Hersteller der Steuerung installiert wird und wesentliche Grundfunktionen für den Betrieb der Steuerung bereitstellt. In den bevorzugten Ausführungsbeispielen ist die Steuerlogik, nach der die Steuerung die Eingangsinformationen von den E/A-Modulen verarbeitet und Ausgangsinformationen erzeugt, kein integrierter Bestandteil des Betriebssystems. Vielmehr ist die Steuerlogik in bevorzugten Ausführungsbeispielen in einem Steuerprogramm definiert, das in einer Ausführungsumgebung 64 ausgeführt wird, die das Betriebssystem 62 bereitstellt. Beispielhaft ist bei der Bezugsziffer 66 ein Steuerprogramm dargestellt, mit dem der elektrische Motor 48 angesteuert wird. Das Betriebssystem 62 stellt in diesem Ausführungsbeispiel eine echtzeitfähige erste Ausführungsumgebung 64 bereit, so dass das Steuerprogramm 66 unter harten Echtzeitbedingungen ausgeführt werden kann, was für eine Lageregelung bei einem schnell bewegten Anlagenteil von Vorteil ist. Ein weiteres beispielhaftes Steuerprogramm, das hier in der echtzeitfähigen Ausführungsumgebung 64 ausgeführt werden kann, ist eine Failsafe-(FS)-Steuerung des Motors 48, insbesondere eine fehlersichere Stillsetzung, in Abhängigkeit von sicherheitsrelevanten Eingangsinformationen, wie etwa dem Zustand der Schutztür 40 oder dem Zustand des Lichtgitter 42. In Ausführungsbeispielen können weitere Steuerprogramme oder Steuerprogrammteile für verschiedene Anlagenteile und/oder verschiedene Betriebsarten der Anlage in der Ausführungsumgebung 64 ausgeführt werden, was hier allgemein durch einen Funktionsblock 66' angedeutet ist.

In dem dargestellten Ausführungsbeispiel ist auf der Hardwareplattform 60 außerdem eine Virtualisierungsplattform 68a in Form eines Typ 2-Hypervisors installiert. Die Virtualisierungsplattform 68a ist eine Software, die hier als Anwendung auf dem Betriebssystem 62 ausgeführt wird. Sie stellt zumindest eine zweite Ausführungsumgebung 70 für zumindest ein zweites Steuerprogramm 72a bereit. In dem hier dargestellten Ausführungsbeispiel ist die zweite Ausführungsumgebung 70 eine virtuelle Maschine, auf der weitere Softwareanwendungen 74 installiert und ausgeführt werden können. In bevorzugten Ausführungsbeispielen erfüllt die zweite Ausführungsumgebung 70 keine harten Echtzeitanforderungen. Sie kann in einigen Ausführungsbeispielen weiche Echtzeitanforderungen erfüllen oder im einfachsten Fall keinerlei deterministisches Verhalten zeigen.

In dem dargestellten und bevorzugten Ausführungsbeispiel stellt die weitere Softwareanwendung 74 eine Containerplattform 76 zur Verfügung, in der eine Vielzahl von zweiten Steuerprogrammen 72a in separaten, containerisierten Anwendungen ausgeführt werden können. Beispielhaft kann die Containerplattform 76 für jedes zweite Steuerprogramm 72a einen sogenannten Docker-Container zur Verfügung stellen.

Wie in Fig. 2 weiter dargestellt ist, kann die Steuerung 10 eine weitere Hardwareplattform 60' aufweisen, die räumlich getrennt von der ersten Hardwareplattform 60 ist. In einigen Ausführungsbeispielen kann die weitere Hardwareplattform 60' eine Cloudplattform sein, die über das Internet mit der ersten Hardwareplattform 60 verbindbar ist. Auf der weiteren Hardwareplattform 60' können eine oder mehrere Virtualisierungsplattformen 68b installiert sein, die eine oder mehrere Ausführungsumgebungen 80 bereitstellen. Beispielhaft ist die Virtualisierungsplattform 68b in Fig. 2 als Typ 1-Hypervisor dargestellt. Es könnte hier aber auch ein Typ 2-Hypervisor verwendet sein, der auf einem (hier nicht dargestellten) weiteren Betriebssystem installiert ist. In der Ausführungsumgebung 80 können weitere Steuerprogramme 72b ausgeführt werden, insbesondere in jeweils separaten Containern. In den bevorzugten Ausführungsbeispielen kann ein zweites Steuerprogramm 72a sehr einfach und schnell von der zweiten Ausführungsumgebung 70 in die dritte Ausführungsumgebung 80 verschoben werden, indem eine Image-Datei mit dem zweiten Steuerprogramm 72a und den dafür benötigten Systembibliotheken erstellt und in die dritte Ausführungsumgebung 80 kopiert wird. Denkbar ist aber auch, dass sich ein Container in der zweiten Ausführungsumgebung 70 selbstständig mit einem Container in der dritten Ausführungsumgebung 80 synchronisiert. Dadurch erreicht man eine Ausfallsicherheit der zweiten Ausführungsumgebung 70.

Die Steuerprogramme 66, 72a, 72b tauschen Daten vorteilhaft über Netzwerkschnittstellen 82, 84, 86, 88 aus, die nach einem standardisierten Netzwerkprotokoll arbeiten. In Ausführungsbeispielen kann die erste Hardwareplattform 60 einen oder mehrere physische (reale) Netzwerkadapter 84 aufweisen, um einen Datenaustausch zu der räumlich entfernten Hardwareplattform 60' zu ermöglichen. Die Netzwerkschnittstelle 84 ist hier daher beispielhaft eine physische (reale) Netzwerkschnittstelle. Ebenso ist die Netzwerkschnittstelle 86 der räumlich entfernten zweiten Hardwareplattform 60' hier eine physische (reale) Netzwerkschnittstelle. In dem hier dargestellten Fall, dass die erste und die zweite Ausführungsumgebung 64, 70 auf einer gemeinsamen Hardwareplattform 60 implementiert sind, kann der Austausch von Daten zwischen dem ersten Steuerprogramm 66 und einem zweiten Steuerprogramm 72a sehr vorteilhaft über virtuelle Schnittstellen 82 erfolgen. Bevorzugt ermöglichen die Netzwerkschnittstellen 82, 84, 86, 88 jeweils eine digitale Datenkommunikation unter Verwendung eines IP-kompatiblen Schnittstellenprotokolls, vorzugsweise eines TCP/IP Protokolls, UDP/IP-Protokolls, OPC UA, Modbus/TCP oder MQTT-Protokolls.

Bei der Bezugsziffer 90 ist hier ein Programmierwerkzeug dargestellt, das beispielsweise ein Personal Computer sein kann, der über die Netzwerkschnittstellen 82, 84, 86, 88 mit den Ausführungsumgebungen 64, 70, 80 verbunden ist. Das Programmierwerkzeug 90 ermöglicht die Erstellung von Steuerprogrammen 66, 72a, 72b sowie die Übertragung von Programmcode über die Netzwerkschnittstellen 82, 84, 86, 88 in die Ausführungsumgebungen 64, 70, 80. Vorteilhaft kann das erste Steuerprogramm mit Hilfe des Programmierwerkzeugs 90 in einer Programmiersprache erstellt werden, die kompatibel zu der Norm IEC 61131 ist. Beispielhaft kann das erste Steuerprogramm als Anweisungsliste, Funktionsplan, Kontaktplan und/oder strukturierter Text erstellt werden.

In den bevorzugten Ausführungsbeispielen beinhaltet das Programmierwerkzeug 90 darüber hinaus die Möglichkeit, zweite Steuerprogramme in anderen Programmiersprachen zu erstellen, die nicht zwingend mit den Sprachen der Norm IEC 61131 kompatibel sind und/oder nicht für eine SPS ausgelegt sind, wie etwa Python, Java, C++ und andere.

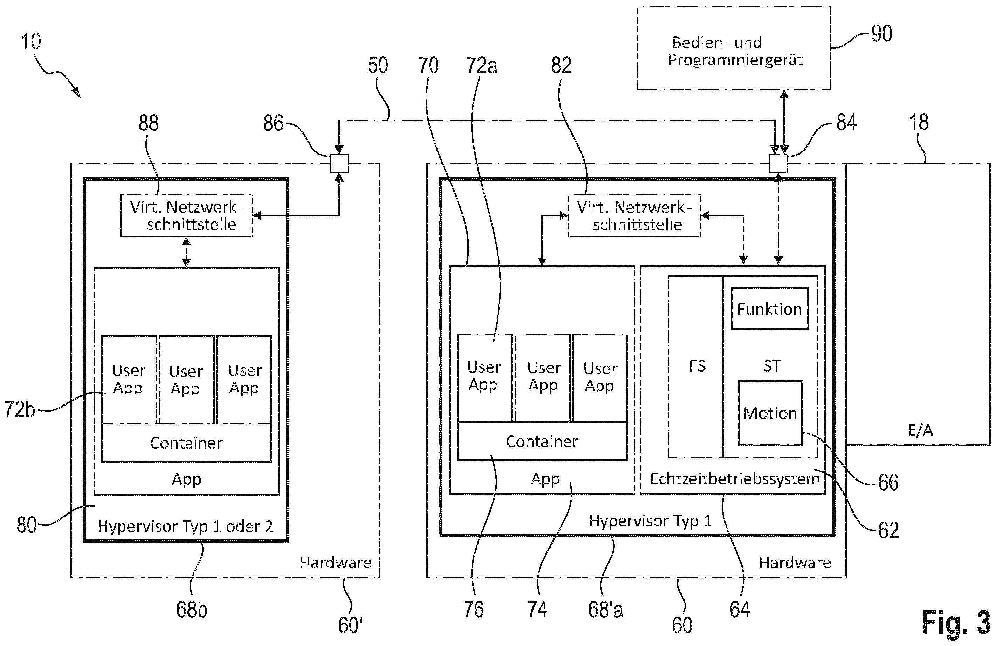

Fig. 3 zeigt ein weiteres Ausführungsbeispiel der Steuerung aus Fig. 1 anhand eines funktionalen Blockschaltbildes. Gleiche Bezugszeichen bezeichnen dieselben Elemente wie zuvor. Das Ausführungsbeispiel in Fig. 3 verwendet einen Typ 1-Hypervisor 68'a als Virtualisierungsplattform. Das Echtzeitbetriebssystem 62 ist in diesem Fall nicht direkt auf der Hardwareplattform 60 installiert, sondern in einer virtuellen Maschine, die der Typ 1-Hypervisor 68'a neben einer weiteren virtuellen Maschine für die zweite Ausführungsumgebung 70 bereitstellt. Innerhalb der zweiten Ausführungsumgebung 70 können wie in dem Ausführungsbeispiel gemäß Fig. 2 mehrere zweite Steuerprogramme 72a in jeweils containerisierten Umgebungen ausgeführt werden.

Wie weiter dargestellt ist, kann die Steuerung 10 auch in diesem Ausführungsbeispiel eine weitere Hardwareplattform 60' aufweisen, die räumlich getrennt von der ersten Hardwareplattform 60 ist. In einigen Ausführungsbeispielen kann die weitere Hardwareplattform 60' eine Cloudplattform sein, die über das Internet mit der ersten Hardwareplattform 60 verbindbar ist. Auf der weiteren Hardwareplattform 60' können eine oder mehrere Virtualisierungsplattformen 68b installiert sein, die eine oder mehrere Ausführungsumgebungen 80 bereitstellen. Beispielhaft ist die Virtualisierungsplattform 68b als Typ 1- oder Typ 2-Hypervisor dargestellt. In der Ausführungsumgebung 80 können weitere Steuerprogramme 72b ausgeführt werden, insbesondere in jeweils separaten Containern. In den bevorzugten Ausführungsbeispielen kann ein zweites Steuerprogramm 72a sehr einfach und schnell von der zweiten Ausführungsumgebung 70 in die dritte Ausführungsumgebung 80 verschoben werden, indem eine Image-Datei mit dem zweiten Steuerprogramm 72a und den dafür benötigten Systembibliotheken erstellt und in die dritte Ausführungsumgebung 80 kopiert wird. Denkbar ist aber auch in diesem Fall, dass sich ein Container in der zweiten Ausführungsumgebung 70 selbstständig mit einem Container in der dritten Ausführungsumgebung 80 synchronisiert. Dadurch erreicht man eine Ausfallsicherheit der zweiten Ausführungsumgebung 70.

Die Steuerprogramme 66, 72a, 72b tauschen auch in dem Ausführungsbeispiel gemäß Fig. 3 Daten vorteilhaft über Netzwerkschnittstellen 82, 84, 86, 88 aus, die nach einem standardisierten Netzwerkprotokoll arbeiten. Wie dargestellt, kann die erste Hardwareplattform 60 einen oder mehrere physische (reale) Netzwerkadapter 84 aufweisen, um einen Datenaustausch zu der räumlich entfernten Hardwareplattform 60' zu ermöglichen. Die Netzwerkschnittstelle 84 ist hier daher eine physische (reale) Netzwerkschnittstelle. Ebenso ist die Netzwerkschnittstelle 86 der räumlich entfernten zweiten Hardwareplattform 60' hier eine physische (reale) Netzwerkschnittstelle. Hingegen kann der Austausch von Daten zwischen dem ersten Steuerprogramm 66 und einem zweiten Steuerprogramm 72a in der zweiten Ausführungsumgebung 70 sehr vorteilhaft über virtuelle Schnittstellen 82 erfolgen. Bevorzugt ermöglichen die Netzwerkschnittstellen 82, 84, 86, 88 jeweils eine digitale Datenkommunikation unter Verwendung eines IP-kompatiblen Schnittstellenprotokolls, vorzugsweise eines TCP/IP Protokolls, UDP/IP-Protokolls, OPC UA, Modbus/TCP oder MQTT-Protokolls.

Zusammenfassend kombiniert die neue Steuerung eine erste Ausführungsumgebung 64, die harte Echtzeitanforderungen erfüllt, mit einer oder mehreren sekundären Ausführungsumgebungen 70, 80, in denen zweite/weitere Steuerprogramme ausgeführt werden, die keine harte Echtzeitanforderungen benötigen. Zumindest die sekundären Ausführungsumgebungen 70, 80 sind mit Hilfe einer Virtualisierungsplattform implementiert. In einem besonders bevorzugten Ausführungsbeispiel wird die echtzeitfähige erste Ausführungsumgebung 64 und eine zweite Ausführungsumgebung 70 ohne harte Echtzeitbedingungen mit Hilfe eines Typ 1-Hypervisors auf einer gemeinsamen Hardwareplattform 60 realisiert und das erste (hart-echtzeitfähige) Steuerprogramm 66 tauscht Daten mit einem zweiten Steuerprogramm 72a, das keine harten Echtzeitbedingungen erfüllt, über virtuelle Netzwerkschnittstellen 82 aus, die ein standardisiertes IP-basiertes Datenübertragungsprotokoll verwenden. Vorteilhaft ist der Typ1- Hypervisor dabei so konfiguriert, dass die erste Ausführungsumgebung 64 auf maximale Echtzeit-Perfomance ausgelegt ist und insbesondere direkten Zugriff auf physikalische Hardwareressourcen hat, während die sekundäre Ausführungsumgebung 70 vollständig virtualisiert ist.

Die neue Steuerung macht es einfach möglich, ein echtzeitfähiges erstes Steuerprogramm, das an den strengen zyklischen Arbeitsablauf einer speicherprogrammierbaren Steuerung für Automatisierungsaufgaben angepasst ist, mit zahlreichen weiteren Funktionalitäten zu ergänzen, die losgelöst von dem zyklischen Arbeitsablauf des ersten Steuerprogramms. sind. Eine Erweiterung des Funktionsumfangs ist aufgrund der Virtualisierung in nahezu jeglichen Programmiersprachen möglich und die Erweiterung kann aufgrund des Datenaustausches über Netzwerkschnittstellen von außerhalb der nicht-virtualisierten Ausführungsumgebung implementiert werden. Es wird praktisch eine generische API in einer proprietären Steuerung für eine automatisierte Anlage integriert.

## Patentansprüche

1. Programmierbare Steuerung zum Steuern einer automatisierten Anlage, in der eine Vielzahl von Steuerungsgeräten (10, 18, 52) über ein Kommunikationsnetzwerk (32, 50) miteinander verbunden sind, insbesondere zum Steuern einer stationären Fertigungs- und/oder Beförderungsanlage, mit einer ersten Hardwareplattform (60), auf der ein von der ersten Hardwareplattform (60) abhängiges erstes Betriebssystem (62) installiert ist, das eine echtzeitfähige erste Ausführungsumgebung (64) für ein erstes Steuerprogramm (66) bereitstellt, mit einer Virtualisierungsplattform (68a, 68'a), die eine zweite Ausführungsumgebung (70) für ein zweites Steuerprogramm (72a) bereitstellt, mit einem ersten Steuerprogramm (66), das in der ersten Ausführungsumgebung (70) lauffähig ist und eine erste Steuerfunktionalität mit harten Echtzeitanforderungen implementiert, und mit einem zweiten Steuerprogramm (72a), das in der zweiten Ausführungsumgebung (70) lauffähig ist und eine zweite Steuerfunktionalität implementiert, wobei die erste Ausführungsumgebung (60) Zugriff auf eine erste Netzwerkschnittstelle (82, 84) besitzt, wobei die zweite Ausführungsumgebung (70) Zugriff auf eine zweite Netzwerkschnittstelle (82) besitzt, und wobei das erste Steuerprogramm (66) und das zweite Steuerprogramm (72a) über die erste und die zweite Netzwerkschnittstelle (82) Daten miteinander austauschen.

2. Programmierbare Steuerung nach Anspruch 1, wobei die Virtualisierungsplattform (68'a) auf der ersten Hardwareplattform (60) implementiert ist und direkt mit der ersten Hardwareplattform (60) interagiert.

3. Programmierbare Steuerung nach Anspruch 1, wobei die Virtualisierungsplattform (68a) auf dem ersten Betriebssystem (62) implementiert ist und über das erste Betriebssystem (62) mit der ersten Hardwareplattform (60) interagiert.

4. Programmierbare Steuerung nach einem der Ansprüche 1 bis 3, wobei die Virtualisierungsplattform (68b) auf einer zweiten Hardwareplattform (60') implementiert ist, die räumlich getrennt von der ersten Hardwareplattform (60) angeordnet und über das Kommunikationsnetzwerk (50) mit der ersten Hardwareplattform (60) verbunden ist.

5. Programmierbare Steuerung nach Anspruch 4, wobei die zweite Hardwareplattform (60') eine Cloudplattform ist.

6. Programmierbare Steuerung nach einem der Ansprüche 1 bis 5, wobei die erste Netzwerkschnittstelle (82, 84) ein IP-kompatibles Schnittstellenprotokoll implementiert.

7. Programmierbare Steuerung nach einem der Ansprüche 1 bis 6, wobei die erste Netzwerkschnittstelle (82, 84) eine innerhalb des Kommunikationsnetzwerks fest zugewiesene erste Adresse besitzt.

8. Programmierbare Steuerung nach einem der Ansprüche 1 bis 7, mit einer dritten Ausführungsumgebung (80), die eine dritte Netzwerkschnittstelle (88) bereitstellt, wobei das zweite Steuerprogramm (72a) wahlweise in der zweiten Ausführungsumgebung (70) und/oder in der dritten Ausführungsumgebung (80) lauffähig ist.

9. Programmierbare Steuerung nach Anspruch 8, wobei dem zweiten Steuerprogramm (72a) innerhalb des Kommunikationsnetzwerks eine feste Adresse zugewiesen ist.

10. Programmierbare Steuerung nach einem der Ansprüche 1 bis 9, wobei die Virtualisierungsplattform ein zweites Betriebssystem virtualisiert.

11. Programmierbare Steuerung nach einem der Ansprüche 1 bis 10, wobei die Anlage ein entlang einer Bewegungsachse (48') bewegliches Anlagenteil (48) aufweist, und wobei das erste Steuerprogramm eine aktuelle Position des beweglichen Anlagenteils (48) entlang der Bewegungsachse (48') regelt.

12. Programmierbare Steuerung nach einem der Ansprüche 1 bis 11, wobei die erste Steuerfunktionalität eine Sicherheitsfunktion (FS) zum Schutz von Personen vor Verletzungen beinhaltet.

13. Programmierbare Steuerung nach einem der Ansprüche 1 bis 11, wobei die zweite Steuerfunktionalität zumindest eine Funktionalität aus der folgenden Gruppe beinhaltet: Monitoring der Anlage, Diagnose, Visualisierung, Datenweitergabe an ein Enterprise-Resource-Planning (ERP)-System, Umschalten zwischen verschiedenen Betriebsarten der Anlage.

14. Verfahren zum Steuern einer automatisierten Anlage, in der eine Vielzahl von Steuerungsgeräten (10, 18, 52) über ein Kommunikationsnetzwerk (32, 50) miteinander verbunden sind, insbesondere zum Steuern einer Fertigungs- und/oder Beförderungsanlage, mit den Schritten:
- Definieren einer Steuerfunktionalität, die einen gewünschten Betrieb der Anlage repräsentiert,
- Aufteilen der Steuerfunktionalität in einen ersten Anteil, der harte Echtzeitanforderungen definiert, und einen zweiten Anteil,
- Erhalten eines ersten Steuerprogramms (66), das den ersten Anteil repräsentiert, und eines zweiten Steuerprogramms (72a), das den zweiten Anteil repräsentiert,
- Bereitstellen einer ersten Hardwareplattform (60) mit einem von der ersten Hardwareplattform (60) abhängigen Betriebssystem (62), das eine echtzeitfähige erste Ausführungsumgebung (64) für das erste Steuerprogramm (66) bereitstellt, wobei die erste Ausführungsumgebung (64) Zugriff auf eine erste Netzwerkschnittstelle (82, 84) besitzt,
- Bereitstellen einer Virtualisierungsplattform (68a, 68'a, 68b), die eine zweite Ausführungsumgebung (70) für das zweite Steuerprogramm (72a) bereitstellt, wobei die zweite Ausführungsumgebung (70) Zugriff auf eine zweite Netzwerkschnittstelle (82, 88) besitzt,
- Ausführen des ersten Steuerprogramms (66) in der ersten Ausführungsumgebung (64), und
- Ausführen des zweiten Steuerprogramms (72a) in der zweiten Ausführungsumgebung (70),
wobei das erste Steuerprogramm (66) und das zweite Steuerprogramm (72a) über die erste und die zweite Netzwerkschnittstelle (82, 88) Daten miteinander austauschen.
